# EUROPEAN PATENT APPLICATION

(11) **EP 1 045 161 A2**
(43) Date of publication of application: **18.10.2000**
(21) Application number: 00830233.3
(22) Date of filing: 28.03.2000
(51) Int. Cl.: F16D 13/40, F16D 55/32, F16D 7/02, F16D 25/08

(54) **Clutch device actuated by a pressurised fluid usable as a brake tensioner or torque limiting joint**

(30) Priority: 12.04.1999 IT BO990166
(71) Applicant: O.M.C. S.n.c. di DANTE CAVALLI & C., 40055 Villanova di Castenaso (Bologna) (IT)
(72) Inventor: Cavalli, Dante, 40055 Villanova di Castenaso (Bologna) (IT)
(74) Representative: Lanzoni, Luciano

(57) **Abstract**

Clutch device actuated by a pressurised fluid usable as a brake, tensioner, or torque limiting joint comprising a hub (1) provided with a flange (2) with a first friction lining (7), a disk element (3) coaxial and free to rotate relative to the hub (1), a plate (4) associated to the hub (1) by means of a grooved profile (9, 10), said plate (4) being provided with a second friction lining (8); the first and the second friction lining (7, 8) co-operate with the disk element (3) in such a way as to transmit twisting moment and/or rotation between said hub (1) and said disk element (3); the plate (4) is pressed by a thrust assembly (11) actuated by a pressurised fluid, whose thrust force can be changed by modifying the pressure of the fluid.

## Description

The present invention relates to a clutch device actuated by a pressurised fluid usable as a brake, tensioner, or torque limiting joint.

Devices used as brakes are known, comprising a generally disk-shaped rotating element and a fixed element, in the form of a caliper or of another disk, which accomplishes the braking action with contact by friction. Control over the devices can be of the mechanical type or it can be obtained with actuator means powered by a pressurised fluid.

Also known are clutch devices, defined as tensioners, which comprise a fixed element and a rotating element. Between the fixed element and the rotating element a coupling with a spring-loaded clutch is provided. A certain resistance against the rotation of the rotating element is thus created, thereby preventing its uncontrolled rotation, due for instance to the inertia of the rotating element.

These tensioning devices find application, for instance, in textile machines, for braking the rotation due to inertia of large fabric reels. Also in tensioners, due to the slipping that occurs during the controlled slipping action, the friction surfaces are worn and their thickness is reduced. Thus, in order to compensate for this wear and maintain the same pressure on the elements of the clutch, and thus the same resistance against rotation, successive adjustments of the pressing springs must be performed.

Also known are clutch devices used as safety devices to limit a twisting moment in a transmission. They generally comprise a hub destined to be coupled with a shaft or with a flange for transmitting motion, and a generally disk-shaped element, which can be a pulley for a belt transmission, a gear wheel for a chain or gear transmission. The disk element is kept in rotation with the hub by means of a clutch coupling comprising one or more friction surfaces and springs that maintain the friction surfaces in mutual contact in order to transmit a torque. When the value of the torque to be transmitted exceeds the value that the clutch coupling is able to transmit, the joint starts to slip and the desired uncoupling of the transmission is thereby obtained. The value of the transmissible torque can be varied by modifying the pressing force of the springs.

Due to the slipping that takes place when the transmission is uncoupled, the friction surfaces are subject to wear so that their thickness diminishes. Hence, in order to compensate for the wear of the friction surfaces and to maintain the same pressure on the elements of the clutch, the pressing springs must be adjusted.

An aim of the present invention is to provide an improved clutch device which can be used indifferently as a brake, tensioner, or torque limiting joint without modifications.

Another aim of the present invention is to provide an improved clutch device that requires no adjustments to the moving parts and is simple to maintain.

Yet another aim of the present invention is to provide an improved clutch device which is simple and economical to produce and easy to mount.

In accordance with an aspect of the present invention, a clutch device as specified in the independent claim is presented. The dependent claims refer to preferred and advantageous embodiments of the invention.

Embodiments of the present invention are described below, purely by way of non limiting example, with the aid of the accompanying drawings, in which:
- Figure 1 shows an axial section of a clutch device according to the present invention;
- Figures 2 shows, in axial section, an alternative embodiment of the clutch device according to the present invention;
- Figure 3 shows a section according to the line III-III of Figure 2, with some parts removed for the sake of greater clarity;

In accordance with the figures of the accompanying drawings, the clutch device according to the present invention essentially comprises a hub 1 having with an axis of rotation A and provided with a flange 2, a disk shaped element 3 coaxial to the hub 1 and free to rotate relative thereto about the same axis A, a plate 4, of substantially annular shape, which presses on the disk shaped element 3 in order to allow the transmission of a twisting moment and/or rotation, and a thrusting assembly 11 acting on the plate 4 and actuated by a pressurised fluid.

The hub 1 comprises a cylindrical part 20 and a flange 2; the latter is provided with a first friction lining 7, generally annulus-shaped and destined to co-operate with the disk element 3 for the transmission of a twisting moment and/or of motion.

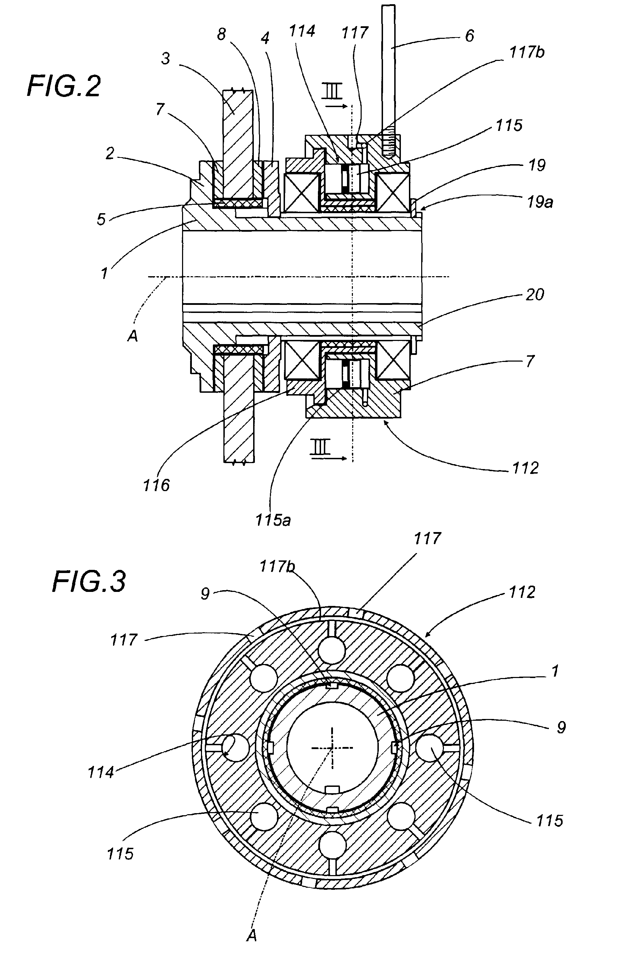

The cylindrical part 20 of the hub 1 comprises a series of grooves 9, for instance four as shown in Figure 3. On the cylindrical part 20 is mounted, free to rotate, the disk element 3. Preferably, between the cylindrical part 20 and the disk element 3 is positioned a bushing 5 made of anti-friction material; alternatively, a bearing with rolling elements (not shown herein), for instance needles, etc., can be provided.

The plate 4 has a generally annular shape and is associated to the hub 1 by means of teeth 10 which are inserted into the grooves 9 of the hub 1. In this way, the plate 4 is constrained to rotate with the hub 1, but is free to move in the axial direction. The plate 4 comprises a second friction lining 8, also generally annulus-shaped and destined to co-operate with the disk element 3 for the transmission of a twisting moment and/or of motion.

The plate 4 presses in the axial direction on the disk element 3 by means of the thrusting assembly 11 whose pressing force can be adjusted to cause the device to operate as a brake, tensioner, or torque limiting joint.

The thrusting assembly 11 comprises a linear actuator 12 or 112 powered by a pressurised fluid 13, whose pressure can be changed; an adjustable thrust force can thus be developed.

The linear actuator 12 is constituted by a cylinder 14 with annular shape within which an annular piston 15 provided with gaskets 15a and 15b is able to slide. The cylinder 14 is constituted by a body 16 comprising a conduit 17 for the admission of the pressurised fluid 13, an annular seat 18 to allow the pressurised fluid to be distributed on the piston 15 even when it is at the limit of its stroke in the extremity of the cylinder 14. The body 16 and the piston 15 are mounted on the hub 1 by means of the ball bearings, respectively 21 and 22; the bearing 22 is free t move axially with the piston 15, whilst the bearing 21 is axially fastened with a safety ring 19 positioned in an appropriate seat 19a of the hub 1.

In this way, the actuator 12 can be fixed relative to the hub 1, even when the latter is rotating, and the connections for the pressurised fluid 13 are therefore favoured. To prevent all rotation or motion, the body 16 comprises a fastening pin 6.

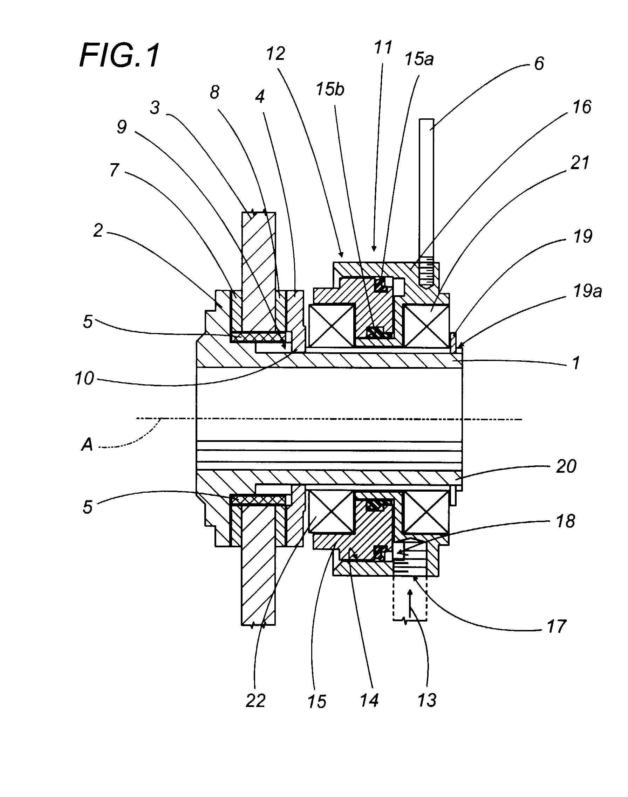

According to an alternative embodiment, shown in Figures 2 and 3, the thrusting assembly 11 is embodied by an actuator 112 comprising a series of cylinders 114 with axis parallel to the axis A. Inside each cylinder 114 a piston 115 provided with gasket 115a is able to slide; for the injection of the pressurised fluid into the cylinders 114 an entry conduit 117 and a distribution ducting 117b are provided. The pistons 115 press on a shared ring 116 which acts on the plate 4 in a manner similar to the piston 16 of the embodiment of Figure 1.

It is clear that the maximum transmissible twisting or braking moment is a function of the pressure of the fluid 13, and that the thrusting force of the assembly 11 is modified by varying this pressure. The maximum transmissible twisting moment is also a function of the surface of the first 7 and of the second 8 friction linings.

According to a simplified embodiment not shown herein, the plate 4 lacks the second friction lining 8 and is not associated to the hub 1 for the transmission of the twisting moment, but serves only the function of pressing on the disk element 3. In this case, for the same pressing force of the plate 4 on the disk element 3, the maximum transmissible twisting or braking moment will be lesser than in the version of clutch device with the plate 4 provided with second friction linings 8.

When the clutch device is used as a torque limiting joint, it is connected to first and second transmission means (not shown) in order to transmit the rotation and twisting moment between the hub 1 and the disk element 3. It is clear that the friction device according to the present invention can transmit the driving rotation from the hub 1 to the disk element 3 and vice versa, and it is also evident that it can function in both directions of rotation.

Considering, for instance, that the hub 1 is connected to motor means (not shown), starting from the hub 1 the rotation and the twisting moment are distributed between the flange 2 and the plate 4. Through the friction linings 7 and 8 the rotation and the twisting moment pass to the disk element 3. If the twisting moment exceeds the pre-determined transmissible value, the pressure of the plate 4 is no longer sufficient and the linings 7 and 8 slip relative to the disk element 3 and thus the transmission is uncoupled. Since the actuation takes place with the pressurised fluid 13, the maintenance of a constant force is guaranteed even when the friction linings 7 and 8, becoming worn, lose thickness.

When the clutch device is used as a tensioner or brake, the hub 1 or the disk element are connected to fixed or lockable means. When the actuator 12 or 112 is activated, the contact pressure between the friction linings 7 and 8 and the disk element 3 increases proportionately. Consequently, resistance to rotation by the unlocked element (hub or disk element) increases. For low values of pressure of the fluid 13, the device is operated as a tensioner and thus a controlled slipping of the disk element 3 relative to the hub 1 or vice versa is obtained. With higher values of pressure of the fluid 13, the device is operated as a brake and thus the mutual locking of the disk 3 relative to the hub 1 is obtained.

The general dimensioning and the choice of material for the friction linings 7 and 8 and for the disk element 3 of the clutch device according to the present invention are such that the same device can operate indifferently as a brake, tensioner, or torque limiting joint.

It is no longer necessary to stock spare parts for each type of device; a simplification is thereby achieved for manufacturing purposes, as well as savings in inventory costs.

## Claims

1. A clutch device for transmitting a twisting moment and/or a rotation between two elements of a transmission, comprising:
a hub (1) having an axis (A), the hub (1) being substantially cylindrical, provided with a flange (2) with a first friction lining (7);
a disk element (3), substantially disk shaped, coaxial to the hub (1), free to rotate thereon about the axis of rotation (A) shared with the hub (1);
a plate (4), associated to the hub (1) and able to slide axially relative thereto, the plate (4) being provided with a second friction lining (8) and being pressed against the disk element (3) towards the flange (2) in such a way as to allow the transmission of a rotation and/or of a twisting moment between the hub (1) and the disk element (3);
a thrusting assembly (11) that presses on the plate (4),
characterised in that the thrusting assembly (11) comprises an actuator (12; 112) powered by a pressurised fluid (13), whose pressure can be varied to obtain the operation of the clutch device as a brake, tensioner, or torque limiting joint.

2. A clutch device as claimed in claim 1, characterised in that the plate (4) is provided with teeth (10) able to slid within grooves (9) obtained in the hub (1) itself, so that the plate (4) is constrained to rotate with the hub (1), but is free to move axially.

3. A clutch device as claimed in claim 1 or 2, characterised in that between the disk element (3) and the hub (1) is positioned a bushing (5) made of anti-friction material or a rolling bearing.

4. A clutch device as claimed in one of the previous claims, characterised in that the actuator (12) comprises an annular cylinder (14) within which an annular piston (15) slides.

5. A clutch device as claimed in one of the claims from 1 to 3, characterised in that the actuator (112) comprises a series of cylinders (114), positioned with the axis parallel to the axis (A), within said cylinders (114) slide respective pistons (115) pressing on a common loop (116) which in turn thrusts on the plate (4).

6. Use as a brake of the clutch device as claimed in one of the previous claims, characterised in that it comprises means for allowing the locking of the disk element (3) or of the hub (1), and in that the actuator (12; 112) is activated until obtaining the locking respectively of the hub (1) or of the disk element (3).

7. Use as a tensioner of the clutch device as claimed in one of the claims from 1 to 5, characterised in that it comprises means for allowing the locking of the disk element (3) or of the hub (1), and in that the actuator (12; 112) is activated until obtaining a degree of controlled slipping respectively of the hub (1) or of the disk element (3).

8. Use as a torque limiting joint of the friction device as claimed in one of the claims from 1 to 5, characterised in that it comprises first transmission means connected to the hub (1) and second transmission means connected to the disk element (3), and in that the actuator (12; 112) is activated until obtaining the desired level of transmissible torque between the hub (1) and the disk element (3).
